(19) **Europäisches Patentamt**

**European Patent Office**

**Office européen des brevets**

(11) Publication number: **0 121 384**
**B1**

(12) **EUROPEAN PATENT SPECIFICATION**

(45) Date of publication of patent specification: **03.08.88**

(51) Int. Cl.⁴: **G 11 B 5/52**

(21) Application number: **84301986.0**

(22) Date of filing: **23.03.84**

(54) Magnetic recording devices.

(30) Priority: **30.03.83 JP 52503/83**

(43) Date of publication of application:
**10.10.84 Bulletin 84/41**

(45) Publication of the grant of the patent:
**03.08.88 Bulletin 88/31**

(84) Designated Contracting States:
**DE FR GB NL**

(56) References cited:
**EP-A-0 040 066**
**EP-A-0 050 024**
**EP-A-0 054 419**
**EP-A-0 087 114**
**GB-A-2 065 416**

(73) Proprietor: **SONY CORPORATION**
**7-35 Kitashinagawa 6-Chome Shinagawa-ku**
**Tokyo 141 (JP)**

(72) Inventor: **Shimpuku, Yoshihide**
**Patent Div.Sony Corp. 7-35, Kitashinagawa-6**
**Shinagawa-ku Tokyo (JP)**

(74) Representative: **Cotter, Ivan John et al**
**D. YOUNG & CO. 10 Staple Inn**
**London WC1V 7RD (GB)**

Courier Press, Leamington Spa, England.

**Description**

This invention relates to magnetic recording devices.

In recent years, in pace with an increase in the amount of digital data (such as digital audio or video signals) to be recorded or reproduced, a strong demand has arisen for increasing the recording density on magnetic tape or like magnetic recording media.

To increase the data recording density, it is customary to reduce the track width or the track pitch, in addition to using a digital data modulation system of higher efficiency or reducing the recording wavelength. However, when the track pitch is reduced in this manner, so-called crosstalk or interaction between adjoining tracks is increased, with the result that the signal-to-noise (SN) ratio or the error rate are affected adversely. For reducing the crosstalk level, it is customary to arrange for the azimuth angle 0 of a magnetic gap of a head associated with a given track to differ from that of a magnetic head associated with an adjoining track, as disclosed for example in our UK Patent Application Publication No. GB—A—2 065 416. However, for smaller azimuth angles θ, the crosstalk level is not decreased as desired and, for the larger azimuth angles θ, the effective recording density is lowered and noise is increased.

European Patent Application Publication No. EP—A—0 040 066 discloses a magnetic recording device for recording digital data on a magnetic recording medium so that plural recording tracks are sequentially formed on the recording medium in an adjoining relationship with one another, the azimuth angles of magnetic heads for forming mutually neighbouring ones of the tracks being equal to +θ and −θ. EP—A—0 040 066 mentions that the value of θ is 7°.

UK Patent Application Publication No. GB—A—2 065 416 (cited above) discloses a similar magnetic recording device. In this case, the different between the azimuth angles of magnetic heads for forming mutually neighbouring ones of the tracks is about 10° to 30°: that is to say, the azimuth angles for the respective heads are about 5° to 15° (for example 7°).

European Patent Application Publication No. EP—A—0 054 419 also discloses a generally similar arrangement in which, once more, the azimuth angle is 7°.

According to the present invention there is provided a magnetic recording device for recording digital data on a magnetic recording medium so that plural recording tracks are sequentially formed on the recording medium is an adjoining relationship with one another, the azimuth angles of magnetic heads for forming mutually neighbouring ones of the tracks being equal to +θ and −θ, characterised in that the angle θ satisfies the relationship $16° \leqq θ \leqq 22°$.

As is described in detail hereinbelow, such a device is capable of reducing crosstalk and noise levels while simultaneously realising high density according. More specifically, as explained hereinbelow, when a recording made by such a device is reproduced, a signal representing digital data reproduced from a track is subject to crosstalk from signals reproduced from adjacent tracks and is subject also to digital errors at a block error rate corresponding to a bit rate of recording of the digital data in the tracks. The above-defined relationship between the azimuth angles of the magnetic heads for forming mutually neighbouring tracks minimises the combined effect of the crosstalk and block error rate.

The invention will now be further described, by way of illustrative and non-limiting example, with reference to the accompanying drawings, in which:

Figure 1 is a schematic perspective view of a rotary magnetic head unit employed in a magnetic recording device embodying the present invention;

Figure 2 is a plan view schematically showing a recording pattern formed on a magnetic tape;

Figure 3 is a graph in which the value of a ratio $λ/T_p$ (recorded wavelength/track pitch) is plotted against crosstalk level;

Figures 4A, B and C are graphs showing frequency spectra of signals modulated in accordance with different modulation systems;

Figures 5A, B and C are graphs in which the value of the recording density per unit length is plotted against a block error rate for different azimuth angles; and

Figure 6 is a graph in which crosstalk and noise levels and block error rates are plotted against azimuth angles.

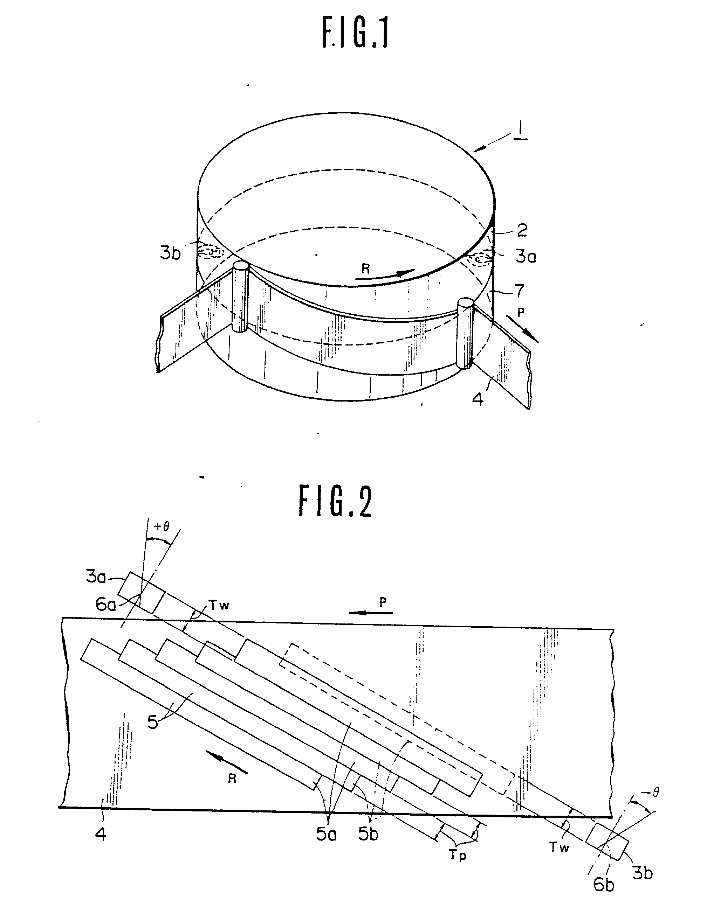

Figure 1 of the accompanying drawings schematically shows a rotary magnetic head unit 1 employed in a rotary head type magnetic recording device embodying the present invention. Two magnetic heads 3a, 3b are mounted on a rotary drum 2 at an angular spacing or interval of 180° in the direction of rotation of the rotary drum 2, which direction is indicated by an arrow R. A magnetic recording medium in the form of a tape 4 is wound helically on the outer periphery of the rotary drum 2 and a stationary drum 7 over an angular extent of approximately 90° and guided to travel in a direction shown by an arrow P.

With the aid of the rotary magnetic head device 1, a plurality of recording tracks 5 inclined relative to the direction P of travel of the tape are recorded on the magnetic tape 4, as schematically shown in Figure 2. As shown in Figure 2, alternate tracks 5a, 5b are formed and recorded by the magnetic heads 3a, 3b, respectively. The magnetic heads 3a, 3b are so mounted that magnetic gaps 6a, 6b thereof are inclined by angles +θ, −θ, respectively, with respect to the direction of the track width. Moreover, for achieving higher recording density, not only is the width $T_w$ of the magnetic head 3 (playback track width) selected to be as narrow as possible, but the track pitch $T_p$ is selected to be less than the width $T_w (T_p < T_w)$ so that the lateral edge of a given track is overlapped by the opposite lateral edge of an adjacent track.

According to the current state of the art, it is possible to reduce $T_w$ to approximately 15 μm and $T_p$ to approximately 10 μm. For achieving higher recording density, it is further required to reduce $T_w$ to approximately 10μm and $T_p$ to approximately 5 μm. These values are thought to represent the lowest limits possible for this system of magnetic recording.

The crosstalk level C from an adjoining track is a function of the width $T_w$, the track pitch $T_p$, the azimuth angle θ and a recording wavelength λ, and may be represented by an equation

$$C(\lambda,\theta,T_p,T_w)= \left| \frac{\sin[\frac{2\pi(T_w-T_p)}{\lambda}\tan\theta]}{\frac{2\pi T_w\tan\theta}{\lambda}} \right| \qquad (1)$$

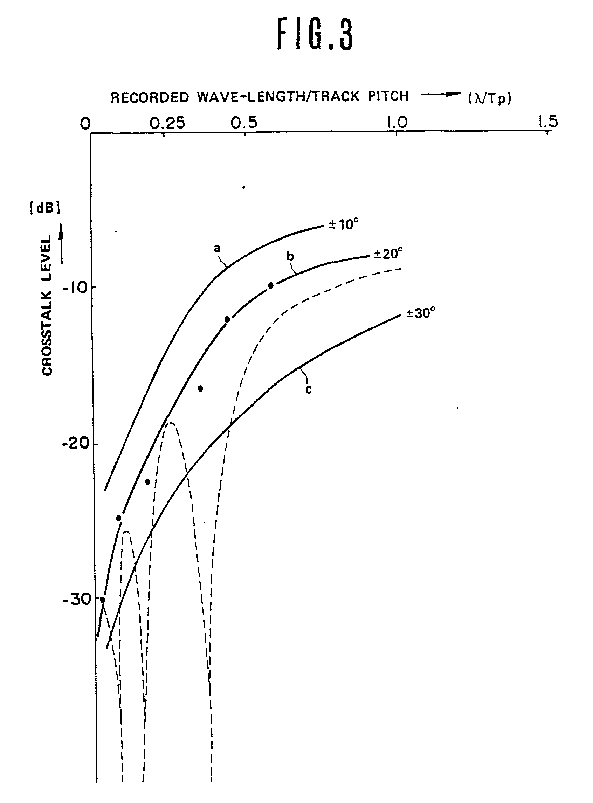

Figure 3 is a graph or chart showing the crosstalk level for various values of the ratio $\lambda/T_p$, wherein the crosstalk level is represented in decibel (dB) values (=20 log C) on the vertical axis. In Figure 3, the pitch $T_p$ is selected to be approximately equal to 10 μm and the width $T_w$ is approximately equal to 15 μm. The crosstalk level is measured with the ratio $\lambda/T_p$ being changed by changing the recording wavelength λ. In Figure 3, three different solid-line curves a, b and c correspond to azimuth angles θ equal to 10°, 20° and 30°, respectively, it being understood that the azimuth angle for one of two adjoining tracks is +θ and that for the other is −θ. Dotted line curves in Figure 3 represent theoretical values of the crosstalk level C obtained for the azimuth angle θ in Equation (1) equal to 20°. It will be noted that the curve b for the measured values corresponding to the azimuth angle θ being equal to 20° may be approximated to an envelope for a series of dotted line curves. This may be attributed to the fact that crosstalk from the adjoining two tracks is likely to be detected during actual measurement and that phase deviation exists between the recording wavelengths of the two tracks.

Turning now to the recording wavelength λ, while this is determined by the frequency of the signals to be recorded it shows different frequency spectra depending upon the modulation system, even when the bit rate of digital data to be recorded remains the same.

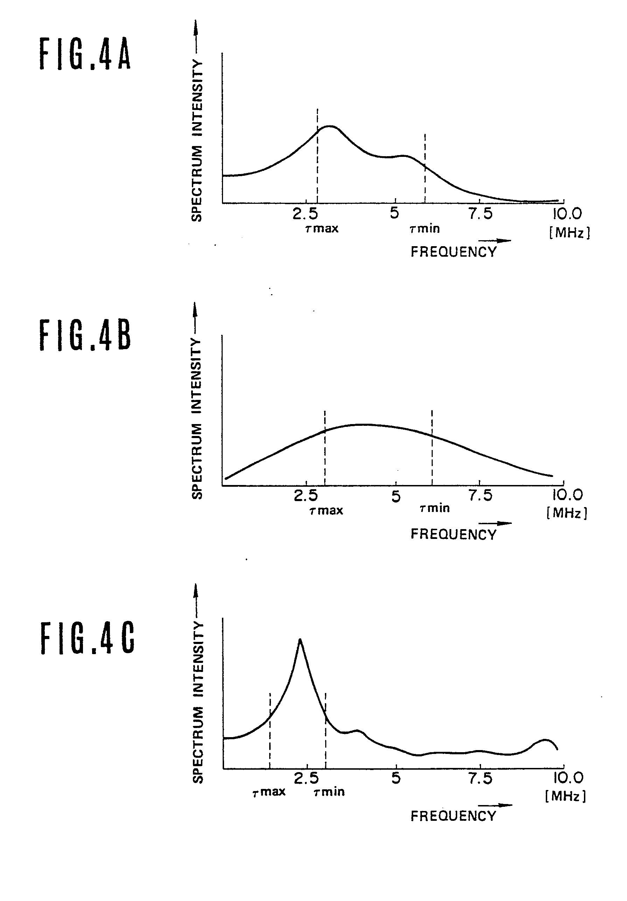

For example, Figures 4A, B and C show frequency spectra for 2/3 conversion, frequency modulation (FM) and modified frequency modulation (MFM) systems, respectively, for the same bit rate of the digital data equal to 6 MBPS. It will be noted from Figure 4 that, while the actual recording signals extend over a wider range of frequency spectra, there is a peak value of distribution between a maximum $\tau_{max}$ (corresponding to $\lambda_{max}$) and a minimum $\tau_{min}$ (corresponding to $\lambda_{min}$) of the period τ. It is now supposed that the spectrum of the crosstalk components is approximately equal to that of the above recording signals. Then, should the crosstalk components in the neighbourhood of $\tau_{max}$ ($\lambda_{max}$) be reduced to a level lower in intensity than the main signal by 20 dB or more, a sufficient signal-to-noise (SN) ratio may be obtained in the range from $\tau_{max}$ to $\tau_{min}$ which is most often required for pulse code modulation (PCM) recording. From Figure 3, the range of values of $\lambda/T_p$ satisfying such condition is given by

$$\lambda_{min}/T_p < \lambda/T_p < \lambda_{max}/T_p \quad 0.05 < \lambda/T_p < 0.2 \qquad (2)$$

It is therefore most desirable to set the azimuth angle θ such that the dB indication of Equation (1) is less than −20 dB and the ratio $\lambda_{max}/T_p$ is less than 0.2.

It will be noted that, when audio signals are recorded in digital form with the aid of the device shown in Figure 1, the bit rate of the recording data is approximately 6 MBPS. For reducing the ratio of the recording wavelength λ to the track pitch $T_p (\lambda/T_p)$ to be lower than 0.2 in the manner described above, the 2/3 conversion system of Figure 4A or the FM system of Figure 4B may preferably be adopted as a modulation system, although this causes a slight reduction in the recording efficiency.

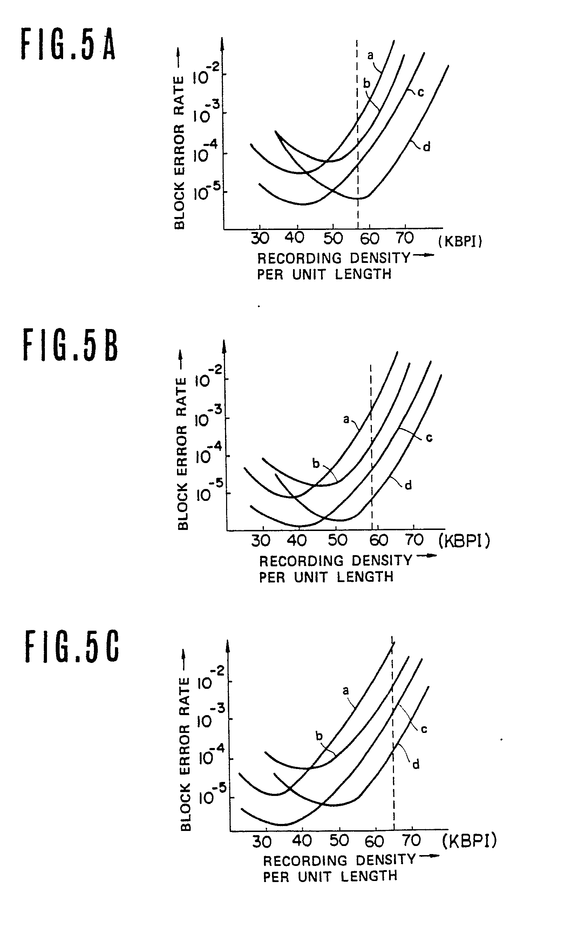

In the graphs or charts of Figures 5A, B and C, the recording density per unit length (in KBPI) is plotted against the block error rate (1 block=96 bits), where the recording density in KBPI is obtained by recording the signals modulated by the aforementioned 2/3 conversion system with the aid of the magnetic heads having azimuth angles of 10°, 20° and 30°. In these charts, curves a, b, c and d are obtained by using recording conditions shown in Table 1 below.

3

TABLE 1

| Curves | Track pitch $T_p$ | Recording medium |
|--------|-------------------|------------------|
| a | 10 μm | Metallic tape |
| b | 5 μm | Metallic tape |
| c | 10 μm | Metallised tape |
| d | 5 μm | Metallised tape |

It should be noted that the azimuth loss has been neglated in plotting the recording density on the horizontal axis of the graphs of Figures 5A, B and C and, since the effective recording density is decreased in proportion to cos θ, the recording density per unit length corresponding for example to about 55 KBPI of the effective recording density may be indicated as shown by dotted lines in Figures 5A, B and C.

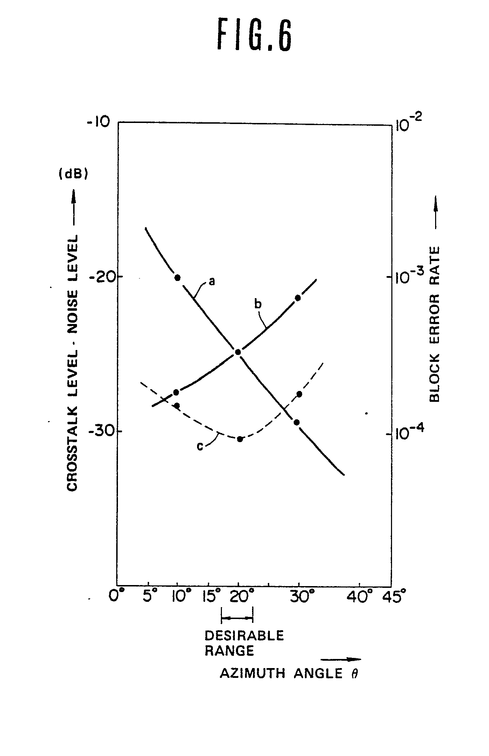

The graph or chart of Figure 6 shows an optimum azimuth angle that may be derived from the aforementioned results. In Figure 6, the crosstalk level and noise level in dB and the block error rate (1 block=96 bits) are plotted on the vertical axis and the azimuth angle θ is plotted on the horizontal axis. The ratio $\lambda/T_p$ is equal to 0.1.

In Figure 6, a curve a represents the crosstalk level in dB, which is decreased as the azimuth angle increases, and a curve b represents the noise level in dB caused by deterioration in the effective density per unit length, the noise level increasing as the azimuth angle θ increases. Thus, the error rate caused by the crosstalk level and the noise, that is, the block error rate shown by a curve c, becomes a minimum at an azimuth angle of about 20°, a range of angles centred about 20° thus being the optimum azimuth angle.

If $\lambda/T_p$ is reduced to less than 0.2 and the crosstalk level to less than −20 dB for the ranges of 5 to 10 μm for $T_p$ and 10 to 15 μm for $T_w$, the optimum range for the azimuth angle θ is given by

$$16° \leqq \theta \leqq 20° \tag{3}$$

With the azimuth angle θ of less that 16°, the crosstalk level is undesirably increased and, with an azimuth angle θ of larger than 22°, the SN ratio is also undesirably affected by deterioration in the effective recording density (density per unit length).

It is to be noted that the present invention may be applied not only to the recording of digital audio signals, but to the recording of digital video signals or computer digital data, and the mechanical construction of the recording device is not limited to that shown by way of example of Figure 1.

From the foregoing it can be seen that there has been disclosed a magnetic recording device in which the azimuth angles θ of any two adjoining tracks (with one being +θ and the other −θ) are selected to be within the range from 16° to 22°, whereby optimum playback conditions of magnetic recording with a minimum block error rate may be ensured for high density recording for a magnetic head width in the range of 10 to 15 μm and a track pitch in the range of 5 to 10 μm.

**Claims**

1. A magnetic recording device for recording digital data on a magnetic recording medium (4) so that plural recording tracks (5) are sequentially formed on the recording medium in an adjoining relationship with one another, the azimuth angles of magnetic heads (3a, 3b) for forming mutually neighbouring ones (5a, 5b) of the tracks (5) being equal to +θ and −θ, characterised in that the angle θ satisfies the relationship $16° \leqq \theta \leqq 22°$.

2. A device according to claim 1, wherein the magnetic heads (3a, 3b) for forming mutually neighbouring ones (5a, 5b) of the tracks (5) are of width $T_w$, the device is so arranged as to form the tracks on the recording medium (4) such that the track pitch $T_p$ is less than the head width $T_w$ and the side edges of the tracks are overlapped by opposite side edges of adjoining tracks, and the ratio $\lambda/T_p$ is selected to be less than 0.2, where λ is the maximum recording wavelength.

3. A device according to claim 1 or claim 2, wherein the magnetic heads are rotatably drivable for recording the digital data on inclined tracks (5) on the recording medium (4), and the azimuth angles of the magnetic heads (3a, 3b) for forming mutually neighbouring ones (5a, 5b) of the tracks (5) are equal to +20° and −20°.

**Patentansprüche**

1. Vorrichtung zur magnetischen Aufzeichnung von digitalen Daten auf einem magnetischen Aufzeichnungsmedium (4) derart, daß eine Vielzahl von Spuren (5) sequentiell auf dem Aufzeichnungs-

**0 121 384**

medium aneinandergrenzend ausgebildet werden, wobei die Azimut-Winkel der Magnetköpfe (3a, 3b) zum Ausbilden aneinandergrenzender (5a, 5b) der Spuren (5) gleich $+\theta$ und $-\theta$ sind, dadurch gekennzeichnet, daß der Winkel $\theta$ die Beziehung $16° \leqq \theta \leqq 22°$ erfüllt.

2. Vorrichtung nach Anspruch 1, bei der die Magnetköpfe (3a, 3b) zum Ausbilden aneinandergrenzender (5a, 5b) der Spuren (5) eine Breite $T_w$ haben, wobei die Vorrichtung so beschaffen ist, daß sie Spuren auf dem Aufzeichnungsmedium (4) derart ausbildet, daß der Spurschritt $(T_n)$ kleiner als die Kopfbreite $(T_w)$ ist und die Seitenränder der Spuren durch gegenüberliegende Seitenränder der angrenzenden Spuren überlappt sind, und wobei das Verhältnis $\lambda/T_p$ so gewählt ist, daß es kleiner als 0,2 ist, worin $\lambda$ die maximale Aufzeichnungswellenlänge ist.

3. Vorrichtung nach Anspruch 1 oder 2, bei der die Magnetköpfe zum Aufzeichnen der digitalen Daten in geneigten Spuren (5) auf dem Aufzeichnungsmedium (4) drehbar antreibbar sind und die Azimut-Winkel der Magnetköpfe (3a, 3b) zum Ausbilden von einander benachbarten (5a, 5b) der Spuren (5) gleich $+20°$ und $-20°$ sind.

### Revendications

1. Dispositif d'enregistrement magnétique pour enregistrer des données numériques sur un support d'enregistrement magnétique (4) de manière que plusieurs pistes d'enregistrement (5) soient formées séquentiellement et avec contiguïté les unes à côté des autres sur le support d'enregistrement, les angles azimutaux de têtes magnétiques (3a, 3b) destinées à former des pistes (5) directement voisines (5a, 5b) correspondant à $+\theta$ et $-\theta$, caractérisé en ce que l'angle $\theta$ satisfait la relation $16° \leqq \theta \leqq 22°$.

2. Dispositif selon la revendication 1, dans lequel les tétes magnétiques (3a, 3b) destinées à former des pistes (5) directement voisines (5a, 5b) ont une largeur $T_w$, le dispositif est agencé pour former les pistes sur le support d'enregistrement (4) de manière que le pas transversal $T_p$ soit inférieur à la largeur de tête $T_w$ et que les bords latéraux des pistes soient recouverts par des bords latéraux opposés de pistes voisines, et le rapport $\lambda/T_p$ est choisi inférieur à 0,2, $\lambda$ étant la longueur d'onde d'enregistrement maximale.

3. Dispositif selon la revendication 1 ou 2, dans lequel les têtes magnétiques peuvent être entraînées en rotation pour l'enregistrement des données numériques dans des pistes obliques (5) sur le support d'enregistrement (4) et les angles azimutaux des têtes magnétiques (3a, 3b) pour former des pistes (5) directement voisines (5a, 5b) sont égaux à $+20°$ et $-20°$.

5

# F.IG.1

# FIG.2

# FIG.3

**FIG.4A**

**FIG.4B**

**FIG.4C**

# FIG.5A

BLOCK ERROR RATE →

RECORDING DENSITY →
PER UNIT LENGTH

(KBPI)

# FIG.5B

BLOCK ERROR RATE →

RECORDING DENSITY →
PER UNIT LENGTH

(KBPI)

# FIG.5C

BLOCK ERROR RATE →

RECORDING DENSITY →
PER UNIT LENGTH

(KBPI)

# FIG.6